(19) Europäisches Patentamt
European Patent Office
Office européen des brevets

(11) EP 3 399 491 A1

(12) EUROPEAN PATENT APPLICATION
published in accordance with Art. 153(4) EPC

(43) Date of publication:
07.11.2018 Bulletin 2018/45

(51) Int Cl.:
G06Q 30/02 (2012.01)

(21) Application number: 16880987.9

(22) Date of filing: 19.12.2016

(86) International application number:
PCT/CN2016/110657

(87) International publication number:
WO 2017/114198 (06.07.2017 Gazette 2017/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.12.2015 CN 201511034172

(71) Applicant: Alibaba Group Holding Limited
Grand Cayman (KY)

(72) Inventors:
• WANG, Yu
Hangzhou
Zhejiang 311121 (CN)

• CHEN, Fan
Hangzhou
Zhejiang 311121 (CN)
• YANG, Yang
Hangzhou
Zhejiang 311121 (CN)
• YE, Zhou
Hangzhou
Zhejiang 311121 (CN)

(74) Representative: Barker Brettell LLP
Medina Chambers
Town Quay
Southampton SO14 2AQ (GB)

(54) **DATA PROCESSING METHOD AND DEVICE**

(57) Data processing method and apparatus are provided in the present application, and are related to the technical field of computers. For a recommendation request submitted by a user, the present application performs a matching between property information of the user and application criteria of all object display environments to select various object display environments that satisfy the property information of the user, and analyze object display environment(s) matching a first object of the request based on historical records of the various object display environments, such as historical records of transaction data of the first object, historical records of application data of various first objects, and respective numbers of display positions of the various object display environments. A display recommendation that is generated based on the object display environment(s) can then be returned to a client of the user for presentation. The present application alleviates operations of the user, reduces the occupancy of system resources, improves an entire display efficiency of the object display environment(s), and reduces the waste of display resources of the various object display environments.

FIG. 2

## Description

## Technical Field

The present application relates to the technical field of computers, and particularly to data processing methods and apparatuses.

## Background

Along with the development of Internet technology, an increasing number of users are posting information in the Internet. The following scenario of data processing exists in the Internet:
A data displaying party configures various types of object display environments in a server. Different object display environments display information needed by specific users, and thus provide quicker information browsing channels for those user groups more quickly. A data displaying party sets up different criteria for different object display environments in practice, and a data providing party applies for displaying a first object thereof in certain one or more object display environments. However, in a real application, a user needs to send query requests to different servers to query criteria of various display environments, and determine whether the criteria are met on his/her own. Since a large number of query requests are sent, a large amount of system resources is consumed, and operations of the user are very tedious. Furthermore, when a data displaying party configures an object display environment in a real application, a large amount of sensitive data is not disclosed to users, and user information is asymmetric to the data displaying party. A user applies for displaying a first object thereof in a certain object display environment blindly. For a data display party, first objects of the certain object environment are crowded, leading to a failure of changing object display environments of certain first objects for display. Also, the user does not know that the object thereof can be displayed in other object display environments which have a higher efficiency of display, thus leading to a waste of display resources of object display environments.

An example of an electronic business platform is used for describing the above process of data processing.

In an electronic business platform, various sales settings may be provided to sellers. These sales settings may be, for example, a series of sales settings on Taobao mobile such as qiang.taobao.com, teija.taobao.com, world.taobao.com, q.taobao.com, etc. Different sales settings have corresponding original design intentions. For example, qiang.taobao.com is a hot exit of gold sellers, facilitating buyers to browse or purchase corresponding hot commodities. Teija.taobao.com supports sales settings for median-level sellers, helping buyers to browse or purchase commodities at special prices. World.taobao.com faces towards quality goods of overseas purchasing markets, helping buyers to directly purchase commodities from various regions. Q.taobao.com provides positive output settings for sellers having a broad industry belt, helping buyers to browse or purchase high quality commodities that are made in China and have public praise. Therefore, a seller can apply for certain one or more sales settings for a commodity thereof, and an electronic business platform can place an object of this commodity into page(s) of the corresponding sale setting(s) for display.

However, since data of an electronic business platform cannot be obtained, a seller cannot quickly determine which sales settings he/she qualifies for. If an application request is submitted for a certain sales setting, the electronic business platform needs to conduct a review thereof. A relatively large amount of client resources is occupied if operations of the user in a client thereof are tedious. For the electronic business platform, a review process is additionally added, and a relatively large amount of server resources is also occupied. Furthermore, since a seller is not able to know which sales setting in which a commodity object thereof is placed will cause a more effective promotion and will have a higher sales volume, the seller may select a certain sales setting at random. Due to a low display efficiency of the commodity object in that sales setting and that the number of commodity objects selectable by that sales setting is larger than the number of display positions, the commodity object of the seller may not be able to be displayed. This thereby leads to a lack of commodity objects in other sales settings having a high efficiency of displaying the commodity object and having available positions, and wastes display resources of that sales setting.

## Summary

In view of the above problems, embodiments of the present application are proposed to provide a data processing method and a corresponding data processing apparatus for solving the above problems or at least a portion of the above problems.

In order to solve the above problems, the present application discloses a data processing method, which includes receiving a recommendation request submitted by a user, the recommendation request including a first object and a user identifier; obtaining property information corresponding to the user identifier, and filtering and selecting various object display environments that match with the property information; determining each object display environment matching the first object based on historical records and respective numbers of display positions of the object display environments under the various filtered and selected object display environments, the historical records including transaction data of various first objects and application data of the various first objects under corresponding object display environments; and generating a display recommendation and returning the display recommendation to a client in which the user is located for display.

The present application further discloses a data processing method, which includes sending a recommendation request to a server, the recommendation request including a first object and a user identifier; and receiving a display recommendation returned from the server based on the recommendation request, and conducting a presentation in a client, the display recommendation being generated by the server based on an object display environment that matches with the first object, the object display environment that matches with the first object being determined based on historical records of various object display environments, and the various object display environments being filtered and selected from a plurality of object display environments based on property information of the user identifier.

The application further discloses a data processing apparatus, which includes a recommendation request receiving module used for receiving a recommendation request submitted by a user, the recommendation request including a first object and a user identifier; an environment filtering and selection module used for obtaining property information corresponding to the user identifier, and filtering and selecting various object display environments that match with the property information; an environment determination module used for determining each object display environment matching the first object based on historical records and respective numbers of display positions of the object display environments under the various filtered and selected object display environments, the historical records including transaction data of various first objects and application data of the various first objects under corresponding object display environments; and a recommendation returning module used for generating a display recommendation and returning the display recommendation to a client in which the user is located for display.

The application further discloses a data processing apparatus, a request sending module used for sending a recommendation request to a server, the recommendation request including a first object and a user identifier; a recommendation presentation module used for receiving a display recommendation returned from the server based on the recommendation request, and conducting a presentation in a client, the display recommendation being generated by the server based on an object display environment that matches with the first object, the object display environment that matches with the first object being determined based on historical records of various object display environments, and the various object display environments being filtered and selected from a plurality of object display environments based on property information of the user identifier.

The embodiments of the present application include the following advantages.

First, in the embodiments of the present application, for object display environments with predefined application criteria, matching can be performed between property information of a user who submits a recommendation request and the application criteria of all the object display environments to select various object display environments that satisfy the property information of the user. As such, object display environment(s) that the user can join can be automatically identified. The user only needs to make a single request, and a server can automatically select object display environment(s) therefor, thus alleviating operations of the user, and reducing the occupancy of system resources.

Second, after the various object display environments that satisfy the property information of the user are selected, the embodiments of the present application can automatically analyze object display environment(s) matching a first object of the request based on historical records of the various object display environments, such as historical records of transaction data of the first object, historical records of application data of various first objects, and respective numbers of display positions of the various object display environments. A display recommendation that is generated based on the object display environment(s) can then be returned to a client of the user for presentation, thereby guiding the user about which sales setting(s) the first object can be applied for display. As such, the embodiments of the present application can automatically analyze which object display environment has a better display effect for a first object provided by a user, guide an application direction of the user, and improve a display efficiency of the first object, thereby improving an entire display efficiency of the object display environment. This can also balance the numbers of first objects of various object display environments, and reduces the waste of display resources of the various object display environments.

## Brief Description of the Drawings

FIG. 1 is a flowchart of a data processing method in accordance with an embodiment of the present application.

FIG. 2 is a flowchart of a data processing method in accordance with another embodiment of the present application.

FIG. 3 is a flowchart of a data processing method in accordance with another embodiment of the present application.

FIG. 4 is a structural block diagram of a data processing apparatus in accordance with an embodiment of the present application.

FIG. 5 is a structural block diagram of a data processing apparatus in accordance with another embodiment of the present application.

## Detailed Description

In order to make the above goals, features and advantages of the present application to be understood more clearly, the present application is described in further detail in conjunction with accompanying drawings and specific implementations.

One of the core concepts of the embodiments of the present application to perform matching between property information of a user who submits a recommendation request and predefined application criteria of object display environments to select various object display environments that satisfy the property information of the user for all the object display environments with the application criteria. An analysis is automatically conducted for object display environment(s) matching a first object of the request based on historical records of the various object display environments, such as historical records of transaction data of the first object, historical records of application data of various first objects, and respective numbers of display positions of the various object display environments. A display recommendation that is generated based on the object display environment(s) can then be returned to a client of the user for presentation, thereby guiding the user about which sales setting(s) the first object can be applied for display. As such, the user does not need to frequently send query requests to a server to determine which object display environment is suitable for him/her, thus alleviating the operations of the user and reducing the occupancy of resource of the client of the user. Furthermore, among various object display environments that match with property information of a user, object display environment(s) matching with a first object needed by the user can be automatically determined for the first object based on historical records under the various object display environments, thereby generating a display recommendation for the user to recommend a more optimized object display environment to the user. As such, the user can be guided to apply for the object display environment, and a display efficiency of the first object and an entire display efficiency of the object display environment are thus improved, thereby reducing the waste of display resources of object display environments.

An electronic business platform is used as an example. If various sales settings are set as object display environments and the sales settings have application criteria, the electronic business platform first selects sales setting(s) having application criteria matching with property information of a merchant based on the property information which may include such property information as basic properties and credibility properties, etc., after receiving a recommendation request for a certain commodity object submitted from the merchant. A sales setting that matches with the commodity object is then determined from the selected sales setting(s) based on historical records thereof, thus recommending the user to apply for the sales setting. For the merchant, only a single recommendation request is needed to be submitted in a client thereof, in order to know which one or more sales settings that he/she can apply for, and also know which one or more sales settings can promote the commodity object in a better manner, thus alleviating the operations of the merchant. Moreover, this can guide a user to apply for a sales setting, balance respective numbers of applications for various object display environments, and improve respective utilization rates of display resources of the various sales settings.

First Embodiment

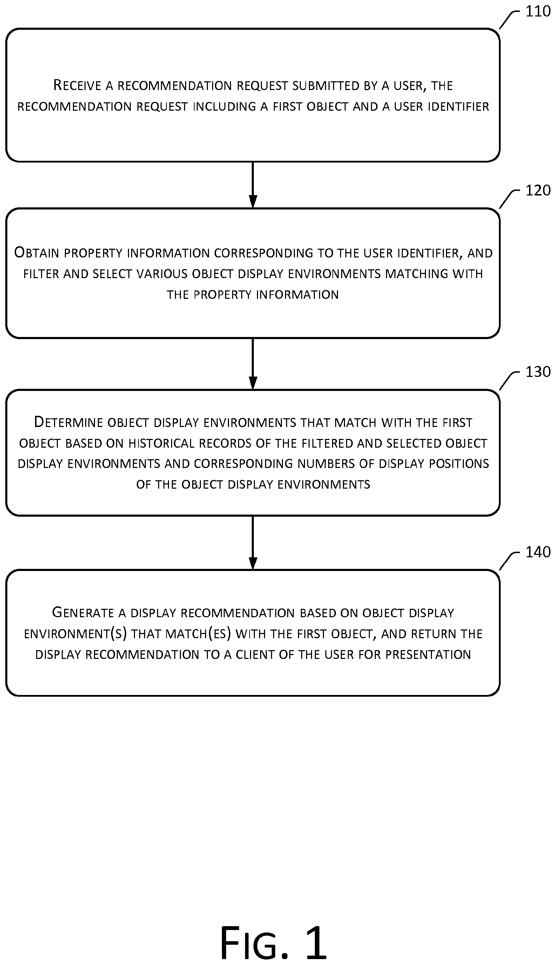

FIG. 1 shows a flowchart of a data processing method in accordance with an embodiment of the present application, which may include the following steps.

Step 110 receives a recommendation request submitted by a user, the recommendation request including a first object and a user identifier.

In the embodiments of the present application, a user may be a merchant of an electronic business platform. The user can submit a recommendation request to a server of the business platform from a client thereof. The server of the electronic business platform receives the recommendation request.

When the recommendation request is sent by the user, the recommendation request may include a first object and a user identifier.

The first object may be a commodity object, and the user identifier may be a merchant ID.

For the sake of description, in the following description, a merchant, a commodity object and a sales setting are respectively used as an example of a user, a first object and an object display environment for description. The embodiments of the present application do not have any limitations on details of an application environment thereof.

Apparently, the object display environment may be interpreted as one or more web pages for specific topic(s) in practice.

Step 120 obtains property information corresponding to the user identifier, and filters and selects various object display environments matching with the property information.

In the embodiments of the present application, when a sales setting is set in an electronic business platform, application criteria of the sales setting are recorded in a database. The application criteria are set according to one or more properties of merchants. For example, if levels of a credibility property of merchants that are set in the electronic business platform include four levels (from low to high: a heart level, a diamond level, a blue crown level, and a golden crown level), and each large level may include small level(s), the application criteria may be set as requiring a credibility property of a merchant to reach the diamond level. A level of a credibility property can be set according to actual needs, and the present application does not have any limitations thereon.

It can be understood that different sales settings may be set with different application criteria according to actual needs. A criterion for information of a property can be set, or criteria for information of multiple properties can be set. The present application does not have any limitations thereon.

Accordingly, after obtaining a merchant ID from the recommendation request, property information of the merchant can be obtained based on the merchant IP, and a matching can be performed between these pieces of property information and respective application criteria of various sales setting. If application criteria of a certain sales setting match with the property information of the merchant, the sales setting is kept. Otherwise, the sales setting is filtered out.

It should be noted that property information of a merchant includes, but is limited to, basic propert(ies) of the merchant, credibility propert(ies) of the merchant, transaction propert(ies) of the merchant, transaction propert(ies) of commodit(ies), seasonal propert(ies) of commodit(ies), etc.

In a real application, a server can extract the property information of the merchant from a platform merchant database based on the merchant ID. The platform merchant database records various pieces of property information of various merchants on the electronic business platform, and features of commodities of commodity objects of the various merchants, such as types of the commodities, keywords associated with the commodities, prices of the commodities, etc.

In the embodiments of the present application, a merchant-to-be-evaluated database can be set up. A data set thereof is a data set that is generated interactively. When a certain merchant sends a recommendation request for a certain commodity object, an ID and feature data of the commodity object, such as property information of an associated merchant, are obtained from the platform merchant database, and are inputted into the merchant-to-be-evaluated database. Step 120 then obtains data of a commodity object from the merchant-to-be-evaluated database, which is compared with application criteria of various sales settings to determine which sales setting(s) meet(s) requirement(s).

Step 130 determines object display environments that match with the first object based on historical records of the filtered and selected object display environments and corresponding numbers of display positions of the object display environments, the historical records including transaction data of various first objects and application data of the various objects under corresponding object display environments.

After the sales settings having the application criteria matching with the property information of the merchant are selected, which one or more sales settings will display the commodity object in a better manner can be determined based on historical records of the sales settings and corresponding numbers of display positions of the sales settings.

A historical record includes transaction data of various commodity objects and application data of the various commodity objects under a corresponding sales setting.

In a real application, when an electronic business platform sets up various types of sales settings, corresponding one or more web pages can be set. However, due to consideration of a browsing efficiency, display positions of the one or more web pages cannot be expanded arbitrarily, and a defined number thereof is set.

It should be noted that, in the embodiments of the present application, data related to a sales setting can be stored in a platform sales database. The application can retrieve corresponding historical data from the platform sales database for processing.

Apparently, in a real application, historical records of various sales settings can be processed in advance. The embodiments of the present application then determine which one or more sales settings will display a commodity object in a better manner using the processed data and respective numbers of positions of the sales settings.

Preferably, prior to step 120 or step 110, the method further includes:
Step 101 constructs, for each object display environment, a transaction value prediction model based on historical records of transaction data of the respective object display environment.

In the embodiments of the present application, a transaction value prediction model is trained using transaction data of various commodity objects under various sales settings that are recorded in the platform sales database. After the transaction value prediction database is constructed, feature data of a commodity object can be treated as an input, and a transaction value can be treated as output data. The transaction data can be understood as a volume of transaction.

Feature data of a commodity object can include property information of a merchant to which the commodity object belongs, commodity features of the commodity object in a current application, etc.

In another preferred embodiment of the present application, step 102 includes substeps A11- A13.

Sub-step A11 obtains various pieces of transaction data from a platform sales database, and performs categorization according to respective object display environments to which the pieces of transaction data belong.

In the embodiments of the present application, the platform sales database uses an ID of a commodity object as a primary key in to record feature data of the commodity object, e.g., commodity features, merchant properties of a merchant to which the commodity object belongs, as previously described, etc., and also to record a sales volume or a volume of transaction of the commodity object on the electronic business platform. Apparently, an identifier of a corresponding sales setting is also recorded.

Accordingly, the embodiments of the present application can obtain various pieces of transaction data from the platform sales database, and categorize these pieces of transaction data into various categories according to sales settings. One category is a data set, and each data set corresponds to one sales setting.

Sub-step A12 constructs a training sample set of a corresponding object display environment using transaction data under each category.

In a real application, a single commodity object may have multiple transaction records. As such, the embodiments of the present application can perform consolidation for a same commodity object, and calculate a volume of transaction for this commodity in the data set described above.

Various dimensions in the feature data of the commodity object are then used as input parameter samples (x1, x2, ..., x2), and the volume of transaction of the commodity object is used as an output parameter sample y. As such, a plurality of parameter pairs of {(x1, x2, ..., x2), y} can be obtained using the above method for a data set of each sales environment to obtain a training sample set.

Sub-step A13 trains a transaction value prediction model having an estimated transaction value as a target using a regression model for a respective training sample set of each object display environment.

For an initial function of a transaction value prediction model, y = f(x1, x2, ..., x2) function, a regressive training of the function can be performed using a regression model and {(x1, x2, ..., x2), y} parameter pairs in the above training sample sets to obtain a f(x1, x2, ..., x2) function and finally obtain a transaction value prediction model having an estimated transaction value as a target. The estimated transaction value can be understood as an estimated volume of transaction.

In the embodiments of the present application, since an input parameter is multidimensional, a multiple regression model can be used. The embodiments of the present do not have any limitations on the details of a training process of a regression model.

Step 102 constructs an application number prediction model based on historical records of application data under a respective object display environment for each object display environment.

In the embodiments of the present application, an application number prediction model is trained using application data of various commodity objects under various sales settings that are recorded in the platform sales database. After the application number prediction model is constructed, an estimated number of applications at the completion of the sales setting are predicted using a corresponding number of applications corresponding at a time at which a recommendation request is received as a basis.

In another preferred embodiment of the present application, step 102 includes substeps A21- A24.

Sub-step A21 obtains application data from a platform sales database, and categorizes an object display environment to which the application data belongs.

In the embodiments of the present application, in the platform sales database, application data of a commodity object, such as which merchant ID applies for which sales setting(s) for which one or several commodity object IDs, can also be recorded.

Apparently, historical application data under a first granularity level, e.g., application data in the previous one month, is obtained in a real application.

Sub-step A22 calculates a number of applications within a designated time period in a predefined application section using the application data under an associated category according to the application section.

In the embodiments of the present application, in response to obtaining application data after a time period and assigning the application data into a category according to a sales setting thereof, further demarcation is performed in the category.

For example, historical data of the previous one month is obtained as described above. The present application can demarcate thereof into a plurality of set according to a second granularity level, such as demarcating into a plurality of sets according to weeks. The second granularity level is the application section as described above. Under a third granularity level, a number of applications are calculated in a next granularity level, e.g., counting a number of applications in each hour according to hours. The third granularity level is the designated time period as described above.

It can be understood that the first granularity level, the second granularity level and the third granularity level are gradually smaller in size.

In a real application, the second granularity level can be determined according to an actual time length of application of the sales setting. For example, if an actual time length of application is one week, a second granularity level can be one week. Apparently, the present application does not have any limitation thereon.

In a real application, the number of applications in a next time period includes the number of applications in a previous time period. For example, one hundred persons have submitted applications in the first one hour. As such, the number of applications in the first hour is one hundred. The number of applications is increased by two hundred persons in the second hour. As such, the number of applications in the second hour is 100 + 200 = 300 persons, and so forth.

Sub-step A23 performs a counterpoint smoothing on each designated time length of all application sections, and obtains a fitted number of applications of each designated time length by fitting.

The above example is used as an example. Since multiple numbers of applications exist in each hour through the demarcation at sub-step A22, counterpoint smoothing may be performed for the number of applications in a respective hour for each hour through the multiple numbers of applications to obtain a fitted number of applications of the respective hour. If m designated time periods exist, fitted numbers of applications of each time period are {N_1, N_2, ..., N_m} according to a sequence.

The counterpoint smoothing is, for example, for a same time period, a weighted average of numbers of applications in different application sections within the time period. For example, an application section has m hours, and four application sections exist. For the first hour, four numbers of applications, L1, L2, L3 and L4 exist, and a fitted number of applications of the first hour is then (L1+L2+L3+L4)/4. Apparently, the counterpoint smoothing can also use other approaches in a real application, and the embodiments of the present application do not have any limitations thereon.

Sub-step A24 constructs an application number prediction model corresponding to the object display environment based on various designated time periods and respective fitted numbers of applications.

Since fitted numbers of applications of various designated time periods are obtained at sub-step A23, an application number prediction model can be constructed. In a real application, an application number prediction model be constructed based on a ratio between a fitted number of applications of each last hour and fitted numbers of applications of an individual hour. An example of m hours in each application section is used. An application number prediction model is:

$$Bsum = q*N\_m/N\_k.$$

N_m is a fitted number of applications of the last hour, and N_k is a fitted number of applications of the kth hour. q is a number of applications that have actually been submitted at the kth hour after the sales setting is open for applications.

In the embodiments of the present application, k > 1.

Furthermore, step 130 includes steps 131 - 133.

Step 131 separately calculates respective estimated transaction values of the first object under various object display environments using a respective transaction value prediction model of each object display environment.

In the embodiments of the present application, for a commodity object submitted by a user, feature data of the commodity object (e.g., commodity features thereof like an ID of a commodity and keyword(s) of the commodity, etc.) and property information of a merchant to which the commodity object belongs (e.g., credibility propert(ies) of the merchant, transaction propert(ies) of the merchant, etc.), can be obtained from the platform merchant database. Input parameters (x1, x2, ..., xn) are constructed, and the input parameters are entered into a transaction volume prediction model y - f(x1, x2, ..., x2) that has been constructed to obtain an estimated transaction value of the commodity object.

Step 132 separately calculates respective estimated numbers of applications under various object display environments using respective application number prediction models of the various object display environments based on corresponding numbers of applications of the various object display environments at the time when the recommendation request is received.

An example of an application number prediction model that is obtained by training with an application section being demarcated according to designated time periods as described above is used. If the time of receiving the recommendation request falls within the kth designated time period after a sales setting is open for applications, the number of applications that have been submitted in the k-1th time period can be obtained and entered into the application number prediction model to calculate and obtain a final estimated number of applications of the sales setting. Apparently, in this type of situation, an estimated number of application may not need to be calculated if a recommendation request is received in the first time period.

It can be understood that the embodiments of the present application record the number of applications that have been submitted in each hour.

An application number prediction model of a sales setting A that is obtained by training with hours as the smallest granularity of demarcation as described above is used as an example. If the sales setting has opened for applications and a user submits a recommendation request in the k+1th time period, the number of applications (q) of the kth hour (k is an integer greater than one) can be obtained. An estimated number of applications can be calculated according to the application number prediction model as follows:

$$Bsum = q*N\_M/N\_k$$

When k = 1, an estimated number of application can be calculated not according to the model. Apparently, N_m can be directly treated to be an estimated number of applications when k = 1. The embodiments of the present application do not have any limitations thereon.

Step 133 determines whether the first object matches a respective object display environment based on an estimated transaction value, an estimated number of applications and a number of display positions for each object display environment.

For each sales setting, after an estimated transaction value of a commodity object submitted by a user and an estimated number of applications of the respective sales setting are obtained, a number of display positions of the respective sales setting can also be obtained. A determination is then made as to whether the commodity object matches the respective sales setting according to a third party.

In another preferred embodiment of the present application, step 133 includes substeps A31- A32.

Sub-step A31 determines an initial estimated ranking of the commodity object based on the estimated transaction value.

In the embodiments of the present application, an application pool may be set up for each object display environment. The application pool includes first objects of which applications have been submitted, and first object(s) satisfying application criteria of the respective object display environment after recommendation requests of others are submitted. An estimated transaction value can be predicted for each first object individually in the application pool according to a transaction volume prediction model as described above.

For example, for sales settings as described above, an application pool may be set up for each sales setting. The application pool includes commodity objects of which applications have been submitted, and commodity object(s) satisfying application criteria of the respective sales setting after recommendation requests of others are submitted. An estimated volume of transaction can be predicted for each commodity object individually in the application pool according to a transaction volume prediction model as described above. For an estimated volume of transaction of a commodity object of a user as described above, an initial estimated ranking of the estimated volume of transaction among estimated volumes of transactions of all commodity objects in the application pool of the sales setting can be calculated.

Sub-step A32 determines whether the first object matches the respective object display environment based on the initial estimated ranking of the first object, the estimated number of applications and the number of display positions under the respective object display environment.

After the initial estimated ranking of the commodity object is obtained, a determination is made as to whether the commodity object is suitable for display in the respective object display environment in conjunction with the use of the estimated number of applications and the number of display positions under the sales setting.

In another preferred embodiment of the present application, sub-step A32 includes sub-step A321 - A323.

Sub-step A321 calculates a final estimated ranking of the first object under the object display environment based on the initial estimated ranking the first object and the estimated number of applications.

In the embodiments of the present application, after the initial estimated ranking of the commodity object is obtained, a ratio of all commodity objects in the application pool that the commodity object accounts for is obtained based on the initial estimated ranking. For example, there are a total of two hundred commodity objects, and an initial estimated ranking of the commodity object corresponding to the recommendation request submitted at step 110 is one hundredth, a ranking parameter thereof is 100/200.

Based on a product of the ranking parameter and the estimated number of applications, a final estimated ranking of the commodity object in the sales setting is obtained.

Sub-step A322 determines whether the final estimated ranking is less than the number of display positions of the object display environment, and proceeds to step 140 if the final estimated ranking is less than the number of display positions.

After the final estimated ranking is obtained, a comparison between the final estimated ranking and the number of display positions of the sales setting can be made. If the final estimated ranking is less than the number of display positions, this indicates that the commodity object can be displayed in the sales setting. Step 140 can be proceeded.

Preferably, the method further includes:
Sub-step A323 selects, for the first object, an object display environment having a difference between a corresponding number of display positions and a final estimated ranking being the smallest to be an object display environment of the first object if a respective final estimated ranking of each object display environment is not less than a respective number of display positions. Step 140 is proceeded.

For a commodity object, if a final estimated ranking under each sales setting is not less than a corresponding number of display positions of the respective sales setting, a sales setting having a difference between a final estimated ranking and a corresponding number of display positions being the smallest is selected to be a sales setting matching the commodity object. For example, a calculation is performed based on "(final estimated ranking - number of display positions) / number of display positions", a sales setting corresponding to a value that is the smallest among values that are obtained is a sales setting corresponding to the commodity object. Step 140 can then be proceeded.

In another preferred embodiment of the present application, prior to sub-step A321, the method further includes:
Sub-step A320 ranks the object display environments in a descending order according to the estimated transaction value of the first object under each object display environment. Sub-step A321 is proceeded.

In the embodiments of the present application, since multiple sales settings are selected for the commodity object at step 120, and an estimated volume of transaction of each sales setting is calculated through the foregoing step, the sales setting can be ranked according to estimated sales volumes. Step A321 is then performed for calculation, beginning with sales settings that are positioned at the top ranks.

In the embodiments of the present application, the number of a final estimated ranking being greater than a number of display positions of a sales setting can be set, for example, setting as one. After the final estimated ranking is less than the number of display positions, calculation of sub-step A321 is not performed for sales setting(s) ranked after the sales setting. For example, if two are set, the procedure of steps A321 - A322 is performed until two sales settings satisfy the requirement, and calculation is not performed for subsequent sales settings. Apparently, in this type of situation, if only one sales setting is obtained from the calculation at the end, only this sales setting is entered into step 140. Other situations can be handled similarly.

It can be understood that corresponding interfaces can be called to obtained data when data of various databases are obtained in the embodiments of the present application. The embodiments of the present application do not have any limitation on the specifics of an acquisition method.

Step 140 generates a display recommendation based on object display environment(s) that match(es) with the first object, and returns the display recommendation to a client of the user for presentation.

In the embodiments of the present application, the display recommendation may include data such as name(s) of sales setting(s), estimated volume(s) of transaction, final estimated ranking(s), etc.

For object display environments configured with application criteria and for a recommendation request submitted by a user, the embodiments of the present application can match property information of the user with the application criteria of all the object display environments to select various object display environments that satisfy the property information of the user, and then automatically analyze object display environment(s) matching a first object for which the request is submitted based on historical records of the various object display environments such as historical records of transaction data of various first objects and historical records of application data of the various first objects. A display recommendation is then generated based on the object display environment(s), and returned to a client where the user is located for presentation, to guide the user to apply an object display environment for displaying the first object. As such, the user does not need to frequently send query requests to a server to determine which type(s) of object display environment he/she is suitable for, thus alleviating the operations of the user and reducing the occupancy of the resources of the client. Furthermore, for a first object needed by a user, object display environment(s) matching the first object can be automatically determined based on historical records under each object display environment among various object display environments that satisfy property information of the user. A display recommendation can thereby be generated for the user, to recommend a better object display environment to the user. Furthermore, the user is guided to apply for the object display environment, thus improving a display efficiency of the first object and an entire display efficiency of the object display environment, and reducing the waste of display resources of each object display environment.

An electronic business platform is particularly used as an example. If various sales settings are set as object display environments therein, and the sales settings have application criteria, the electronic business platform first selects sales settings having respective application criteria that match property information of a certain merchant based on the property information of the merchant (which is property information such as basic properties, credibility properties, etc.) after receiving a recommendation request for a certain commodity object submitted by the merchant. From among these selected sales settings, the electronic business platform then determines sales setting(s) matching the commodity object based on historical records thereof, and thus recommends the sale setting(s) that the user can apply for. For the merchant, only a single recommendation request is needed to be submitted in a client thereof, in order to know which one or more sales settings that he/she can apply for, and also know which one or more sales settings can promote the commodity object in a better manner, thus alleviating the operations of the merchant. Moreover, this can guide a user to apply for a sales setting, balance respective numbers of applications for various object display environments, and improve respective utilization rates of display resources of the various sales settings.

In order to describe the present application more clearly, the present application is described using a second embodiment on a basis of the first embodiment.

Second Embodiment

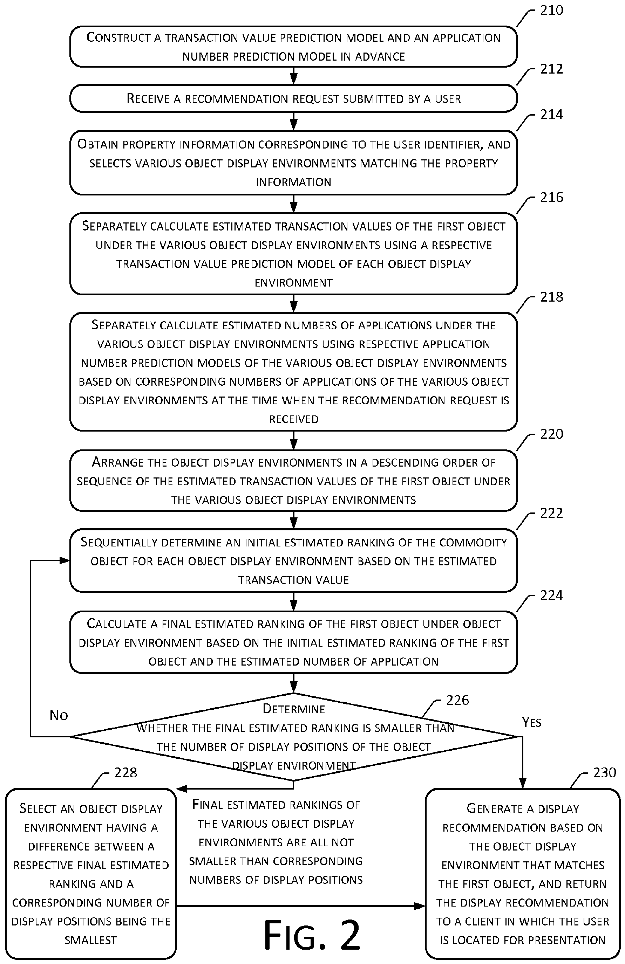

FIG. 2 shows a flowchart of a data processing method in accordance with an embodiment of the present application. The following steps can be included.

Step 210 constructs a transaction value prediction model and an application number prediction model in advance.

The transaction value prediction model and the application number prediction model can be constructed using principles similar to those of the first embodiment.

Step 212 receives a recommendation request submitted by a user, the recommendation request including a first object and a user identifier.

For example, a merchant XXX submits a recommendation request, and the recommendation request includes a commodity object (yyy) and a merchant ID (xxx). In this case, yyy and feature data can be inputted into a merchant-to-be-evaluated database.

Step 214 obtains property information corresponding to the user identifier, and selects various object display environments matching the property information.

Property information of the merchant yyy is retrieved from the merchant-to-be-evaluated database, and is matched with application criteria of each sales setting to determine sales setting(s) of which respective criteria are fulfilled. For example, p number of sales settings are confirmed.

Step 216 separately calculates estimated transaction values of the first object under the various object display environments using a respective transaction value prediction model of each object display environment.

According to similar principles of the first embodiment, estimated volumes of transactions of yyy in the various object display environments are calculated to obtain estimated volumes of transaction {G_1, G_2, ..., G_p} of the p number of sales settings.

Step 218 separately calculates estimated numbers of applications under the various object display environments using respective application number prediction models of the various object display environments based on corresponding numbers of applications of the various object display environments at the time when the recommendation request is received.

According to similar principles of the first embodiment, estimated numbers of applications, {Bsum_1, Bsum_2, ..., Bsum_p}, of the p number of sales settings in the kth hour are calculated.

Step 220 arranges the object display environments in a descending order of sequence of the estimated transaction values of the first object under the various object display environments, and arranges the sales settings in a descending order of sequence according to corresponding {G_1, G_2, ..., G_p}.

Step 222 sequentially determines an initial estimated ranking of the commodity object for each object display environment based on the estimated transaction value.

An initial estimated ranking, $R\_1\_k$, of yyy in a sales setting that is positioned at the front of the sequence based on the foregoing step. A total number of commodity objects in an application pool is U.

Step 224 calculates a final estimated ranking of the first object under object display environment based on the initial estimated ranking of the first object and the estimated number of application.

A final estimated ranking $R\_i$ of the ith setting is calculated according to $R\_i=(R\_i\_k/U)*Bsum\_i$, where $R\_i\_k$ represents an initial estimated ranking of yyy in the ith sales setting, and Bsum_i represents an estimated number of applications of the ith client.

Step 226 determines whether the final estimated ranking is smaller than the number of display positions of the object display environment. If the final estimated ranking is smaller than the number of display positions of the object display environment, the object display environment is treated as an object display environment matching the first object, and step 230 is proceeded. If the final estimated ranking is not smaller than the number of display positions of the object display environment, step 228 is proceeded.

A comparison between $R\_i$ and the number of display positions, $W\_i$, of the ith sales setting is performed and determined.

Step 228 selects an object display environment having a difference between a respective final estimated ranking and a corresponding number of display positions being the smallest, and step 230 is proceeded.

If $R\_i$ under the p number of sales settings are all greater than corresponding $W\_i$, a respective difference between $R\_i$ and the ith sales setting is calculated according to a formula $(R\_i-W\_i)/W\_i$, and a sales setting having the smallest $(R\_i-W\_i)/W\_i$ is selected for entering into step 230.

Step 230 generates a display recommendation based on the object display environment that matches the first object, and returns the display recommendation to a client in which the user is located for presentation.

In the embodiments of the present application, various sales settings are set as object display environments in an electronic business platform, and the sales settings have application criteria. The electronic business platform first selects sales settings having respective application criteria that match property information of a certain merchant based on the property information of the merchant (which is property information such as basic properties, credibility properties, etc.) after receiving a recommendation request for a certain commodity object submitted by the merchant. From among these selected sales settings, the electronic business platform then determines sales setting(s) matching the commodity object based on historical records thereof, and thereby recommends the sale setting(s) that the user can apply for. For the merchant, only a single recommendation request is needed to be submitted in a client thereof, in order to know which one or more sales settings that he/she can apply for, and also know which one or more sales settings can promote the commodity object in a better manner, thus alleviating the operations of the merchant. Moreover, this can guide a user to apply for a sales setting, balance respective numbers of applications for various object display environments, and improve respective utilization rates of display resources of the various sales settings.

Third Embodiment

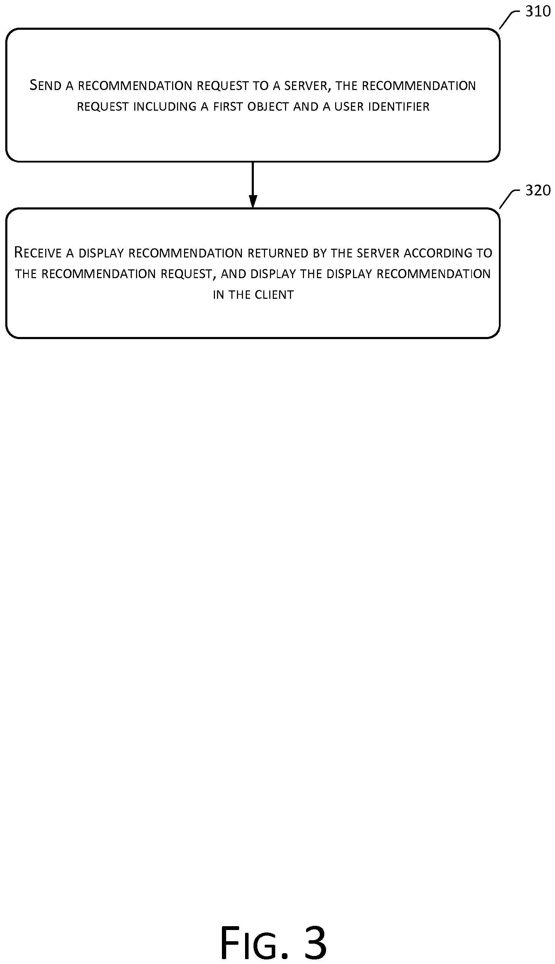

FIG. 3 shows a flowchart of a data processing method in accordance with an embodiment of the present application. The following steps may be included.

Step 310 sends a recommendation request to a server, the recommendation request including a first object and a user identifier.

In the embodiments of the present application, a merchant can send a recommendation request to a server of an electronic business platform from a client thereof.

Step 320 receives a display recommendation returned by the server according to the recommendation request, and displays the display recommendation in the client. The display recommendation is generated by the server based on object display environment(s) that match(es) with the first object. The object display environment(s) that match(es) with the first object is/are determined based on historical records of various object display environments. The various object display environments are selected and obtained from among object a plurality of display environments based on property information corresponding to the user identifier.

In the embodiments of the present application, in response to receiving the recommendation request, the server of the electronic business platform generates a display recommendation corresponding to the first object according to related principles of the first embodiment or the second embodiment, and returns the display recommendation to a client. Details of a process of generating a display recommendation by the server can be referenced to the description of the first embodiment and the second embodiment, and is not repeatedly described herein.

After receiving the display recommendation, the client generates a display interface, and renders the display recommendation onto the display interface for presentation.

Thereafter, a user can purposely submit an application to the electronic business platform to have the first object displayed in a certain object display environment.

For object display environments configured with application criteria and for a recommendation request submitted by a user, the embodiments of the present application can match property information of the user with the application criteria of all the object display environments to select various object display environments that satisfy the property information of the user, and then automatically analyze object display environment(s) matching a first object for which the request is submitted based on historical records of the various object display environments such as historical records of transaction data of various first objects and historical records of application data of the various first objects. A display recommendation is then generated based on the object display environment(s), and returned to a client in which the user is located for presentation, to guide the user to apply an object display environment for displaying the first object. As such, the user does not need to frequently send query requests to a server to determine which type(s) of object display environment he/she is suitable for, thus alleviating the operations of the user and reducing the occupancy of the resources of the client. Furthermore, for a first object needed by a user, object display environment(s) matching the first object can be automatically determined based on historical records under each object display environment among various object display environments that satisfy property information of the user. A display recommendation can thereby be generated for the user, to recommend a better object display environment to the user. Furthermore, the user is guided to apply for the object display environment, thus improving a display efficiency of the first object and an entire display efficiency of the object display environment, and reducing the waste of display resources of each object display environment.

An electronic business platform is particularly used as an example. If various sales settings are set as object display environments therein, and the sales settings have application criteria, the electronic business platform first selects sales settings having respective application criteria that match property information of a certain merchant based on the property information of the merchant (which is property information such as basic properties, credibility properties, etc.) after receiving a recommendation request for a certain commodity object submitted by the merchant. From among these selected sales settings, the electronic business platform then determines sales setting(s) matching the commodity object based on historical records thereof, and thus recommends the sale setting(s) that the user can apply for. For the merchant, only a single recommendation request is needed to be submitted in a client thereof, in order to know which one or more sales settings that he/she can apply for, and also know which one or more sales settings can promote the commodity object in a better manner, thus alleviating the operations of the merchant. Moreover, this can guide a user to apply for a sales setting, balance respective numbers of applications for various object display environments, and improve respective utilization rates of display resources of the various sales settings.

It should be noted that the method embodiments are represented as series of action combinations for the sake of description. However, one skilled in the art can understand that the embodiments of the present application are not limited to the described orders of actions because certain steps can be executed in other orders or in parallel according to the embodiments of the present application. Furthermore, one skilled in the art should also understand that the embodiments described in the specification are preferred embodiments, and actions involved therein may not necessarily be essential to the embodiments of the present application.

Fourth Embodiment

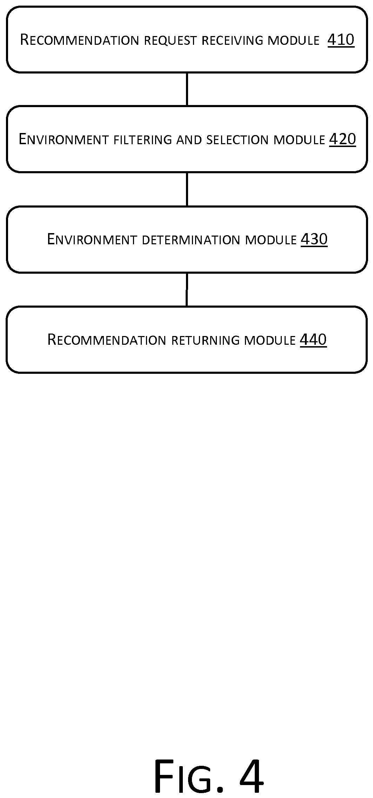

FIG. 4 shows a structural block diagram of a data processing apparatus in accordance with an embodiment of the present application. The following modules may be included.

A recommendation request receiving module 410 is used for receiving a recommendation request submitted by a user, the recommendation request including a first object and a user identifier.

An environment filtering and selection module 420 is used for obtaining property information corresponding to the user identifier, and filtering and selecting various object display environments that match with the property information.

An environment determination module 430 is used for determining each object display environment matching the first object based on historical records and respective numbers of display positions of the object display environments under the various filtered and selected object display environments, the historical records including transaction data of various first objects and application data of the various first objects under corresponding object display environments.

A recommendation returning module 440 is used for generating a display recommendation and returning the display recommendation to a client in which the user is located for display.

In another preferred embodiment of the present application, the environment determination module includes an estimated transaction value determination sub-module used for separately calculating estimated transaction values of the first object under the various object display environments using respective transaction value prediction models of the object display environments, wherein the respective transaction value prediction models are constructed based on historical records of transaction data under corresponding object display environments; an estimated application number determination sub-module used for separately calculating estimated numbers of applications of the first object under the various object display environments using respective application number prediction models of the object display environments based on corresponding numbers of applications of the various object display environments at the time when the recommendation request is received, wherein the respective application number prediction models are constructed based on historical records of application data under corresponding object display environments; and an environment determination sub-module used for determining whether the first object is suitable for a respective object display environment for each object display environment based on an estimated transaction value, an estimated number of applications and the number of display positions under the respective object display environment.

In another preferred embodiment of the present application, the environment determination sub-module includes a first acquisition sub-module used for determining an initial estimated ranking of the commodity object based on the estimated transaction value; and an environment determination sub-module used for determining whether the first object is suitable for the respective object display environment based on the initial estimated ranking of the first object, the estimated number of applications, and a number of display positions under the respective object display environment.

In another preferred embodiment of the present application, the first environment determination sub-module includes a final ranking determination sub-module used for calculating a final estimated ranking of the first object under the respective object display environment based on the initial estimated ranking of the first object and the estimated number of application; and a position determination sub-module used for determining whether the final estimated ranking is smaller than the number of display positions of the respective object display environment, and if the final estimated ranking is smaller than the number of display positions, recommendation returning module.

In another preferred embodiment of the present application, a compensation-for-failed-matching sub-module is further included, which is used for selecting an object display environment having a difference between a final estimated ranking for the first object and a corresponding number of display positions being the smallest as an object display environment matching the first object if final estimated rankings of the various object display environments are not smaller than respective numbers of display positions, and proceeding to the step of generating the display recommendation and returning the display recommendation to the client in which the user is located for display.

In another preferred embodiment of the present application, before the final ranking determination sub-module, an ordering sub-module is further included, which is used for ordering the object display environments in a descending order of the estimated transaction values of the first object under the various object display environments, and starting from an object display environment positioned at the front of the order, entering thereof into the final ranking determination sub-module.

In another preferred embodiment of the present application, a transaction value prediction model construction module is also included, which includes a transaction data acquisition sub-module used for obtaining various pieces of transaction data from a platform sales database, and categorizing respective object display environments to which the pieces of transaction data belong; a training sample set construction sub-module used for constructing corresponding training sample sets of the object display environments using transaction data under each category; and a transaction value prediction model training sub-module used for training a respective transaction value prediction model with an estimated transaction value as a target with a training sample set of each object display environment using a regression model training.

In another preferred embodiment of the present application, an application number prediction model construction module is also included, which includes an application number acquisition sub-module used for obtaining various pieces of application data from a platform sales database, and categorizing respective object display environments to which the pieces of application data belong; a demarcation sub-module used for counting respective numbers of applications within designated time periods in predefined application section(s) using application data under respective categories according to the application section(s); a fitting sub-module used for performing counterpoint smoothing for various designated time lengths of all the application section(s) to obtain fitted numbers of applications of the various designated time periods by fitting; and an application number prediction model construction sub-module used for constructing corresponding application number prediction models of the object display environments based on the various designated time periods and the fitted numbers of applications.

In another preferred embodiment of the present application, the first object is a commodity object, the object display environment is a sales setting, and the estimated transaction values are estimated volumes of transaction.

Fifth Embodiment

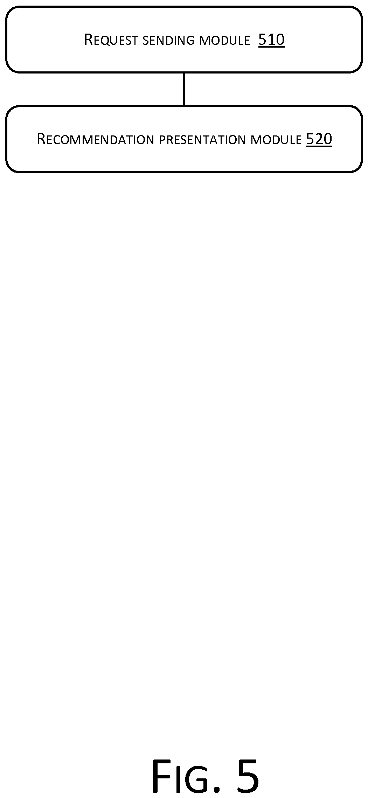

FIG. 5 shows a structural block diagram of a data processing apparatus in accordance with an embodiment of the present application, which is applied in a client, and may include the following modules.

A request sending module 510 is used for sending a recommendation request to a server, the recommendation request including a first object and a user identifier.

A recommendation presentation module 520 is used for receiving a display recommendation returned from the server based on the recommendation request, and conducting a presentation in the client, the display recommendation being generated by the server based on an object display environment that matches with the first object, the object display environment that matches with the first object being determined based on historical records of various object display environments, and the various object display environments being filtered and selected from a plurality of object display environments based on property information of the user identifier.

Since the apparatus embodiments are basically similar to the method embodiments, a description thereof is relatively simple, and related portions can be referenced to corresponding portions of the method embodiments.

The embodiments in the present specification are described in a progressive manner. Each embodiment has a focus that is different from those of other embodiments. Same and similar portions of various embodiments can be referenced with each other.

One skilled in the art should understand that the embodiments of the present application can be provided as a method, an apparatus, or a computer program product. Accordingly, an embodiment of the present application can be adopted in a form of a complete hardware embodiment, a complete software embodiment or an embodiment of a software and hardware combination. Furthermore, the embodiments of the present application can be adopted in a computer program product implemented in a form of one or more computer usable storage media (which includes, but is not limited to, a magnetic storage device, CD-ROM, an optical storage device, etc.) including computer usable program codes.

In a typical configuration, a computing device includes one or more processors (CPU), an input/output interface, a network interface, and memory. The memory may include a form of computer readable media such as a volatile memory, a random access memory (RAM) and/or a non-volatile memory, for example, a read-only memory (ROM) or a flash RAM. The memory is an example of a computer readable media. The computer readable media may include a volatile or non-volatile type, a removable or non-removable media, which may achieve storage of information using any method or technology. The information may include a computer-readable instruction, a data structure, a program module or other data. Examples of computer storage media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

The present application is described with reference to flowcharts and/or block diagrams of the methods, terminal devices (systems), and computer program products according to the embodiments of the present application. It should be understood that computer program instructions may be used to implement each process and/or block in the flowcharts and/or block diagrams and a combination of process(es) and/or block(s) in the flowcharts and/or the block diagrams. These computer program instructions may be provided to a general-purpose computer, a special-purpose computer, an embedded processor, or a processor of another programmable data processing terminal device to generate a machine, so that the instructions executed by a computer or a processor of another programmable data processing terminal device generate an apparatus for implementing function(s) specified in one or more processes in the flowcharts and/or in one or more blocks in the block diagrams.

These computer program instructions may also be stored in a computer readable storage device that can instruct a computer or another programmable data processing terminal device to perform operations in a particular manner, such that the instructions stored in the computer readable storage device generate an article of manufacture that includes an instruction apparatus. The instruction apparatus implements function(s) that is/are specified in one or more processes in the flowcharts and/or in one or more blocks in the block diagrams.

These computer program instructions may also be loaded onto a computer or another programmable data processing terminal device, such that a series of operations are performed on the computer or the other programmable terminal device, thereby generating computer-implemented processing. Therefore, the instructions executed on the computer or the other programmable terminal device provide a procedure for implementing function(s) specified in one or more processes in the flowcharts and/or in one or more blocks in the block diagrams.

Although exemplary embodiments in the embodiments of the present application have been described, one skilled in the art may perform other changes and modifications to these embodiments after knowing the basic inventive concept. Therefore, the appended claims are intended to be interpreted as including the preferred embodiments and all the changes and modifications that fall into the scope of the embodiments of the present application.

Finally, it should be further noted that relational terms such as "first" and "second" are only used for distinguishing one entity or operation from another entity or operation, and does not necessarily require or imply any of these relationships or ordering between these entities or operations in reality. Moreover, terms such as "include", "comprise" or other variations thereof are intended to cover non-exclusive inclusion, so that a process, method, article or terminal device including a series of elements not only includes the elements, but also includes other elements not explicitly listed, or further includes inherent elements of the process, method, article or terminal device. Without further limitations, an element defined by a phrase "include a/an..." does not exclude other same elements to exist in a process, method, article, or terminal device that includes the element.

Data processing methods, and data processing apparatuses provided in the present application are described in detail above. Specific examples are used herein to illustrate the principles and implementations of the present application, and the description of the embodiments above is merely used to help understand the methods of the present application and the core ideas thereof. Furthermore, one of ordinary skill in the art may change the exemplary implementations and scopes of application based on the ideas of the present application. In short, the content of the specification should not be construed as limitations to the present application.

**Claims**

1. A data processing method comprising:

   receiving a recommendation request submitted by a user, the recommendation request including a first object and a user identifier;
   obtaining property information corresponding to the user identifier, and selecting various object display environments that match with the property information;
   determining each object display environment matching the first object based on historical records and respective numbers of display positions of the object display environments under the various selected object display environments, the historical records including transaction data of various first objects and application data of the various first objects under corresponding object display environments; and generating a display recommendation, and returning the display recommendation to a client in which the user is located for display.

2. The method of claim 1, wherein determining each object display environment matching the first object based on the historical records and the respective numbers of display positions of the object display environments under the various selected object display environments comprises:

   separately calculating estimated transaction values of the first object under the various object display environments using respective transaction value prediction models of the object display environments, wherein the respective transaction value prediction models are constructed based on historical records of transaction data under corresponding object display environments;
   separately calculating estimated numbers of applications of the first object under the various object display environments using respective application number prediction models of the object display environments based on corresponding numbers of applications of the various object display environments at the time when the recommendation request is received, wherein the respective application number prediction models are constructed based on historical records of application data under corresponding object display environments; and
   determining whether the first object is suitable for a respective object display environment for each object display environment based on an estimated transaction value, an estimated number of applications and a number of display positions under the respective object display environment.

3. The method of claim 2, wherein determining whether the first object is suitable for the respective object display environment for each object display environment based on the estimated transaction value, the estimated number of applications and the number of display positions under the respective object display environment comprises:

   determining an initial estimated ranking of the commodity object based on the estimated transaction value; and
   determining whether the first object is suitable for the respective object display environment based on the initial estimated ranking of the first object, the estimated number of applications,

and the number of display positions under the respective object display environment.

4. The method of claim 3, wherein determining whether the first object is suitable for the respective object display environment based on the initial estimated ranking of the first object, the estimated number of applications, and the number of display positions under the respective object display environment comprises:

calculating a final estimated ranking of the first object under the respective object display environment based on the initial estimated ranking of the first object and the estimated number of application;

determining whether the final estimated ranking is smaller than the number of display positions of the respective object display environment; and

if the final estimated ranking is smaller than the number of display positions, generating the display recommendation and returning the display recommendation to the client in which the user is located for display.

5. The method of claim 4, further comprising selecting an object display environment having a difference between a final estimated ranking for the first object and a corresponding number of display positions being the smallest as an object display environment matching the first object if final estimated rankings of the various object display environments are not smaller than respective numbers of display positions, and proceeding to the generating of the display recommendation and returning the display recommendation to the client in which the user is located for display.

6. The method of claim 4, wherein prior to calculating the final estimated ranking of the first object under the respective object display environment based on the initial estimated ranking of the first object and the estimated number of application, the method further comprises:

ordering the object display environments in a descending order of the estimated transaction values of the first object under the various object display environments; and

starting from an object display environment positioned at the front of the order, proceeding to the calculating of the final estimated ranking of the first object under the respective object display environment based on the initial estimated ranking of the first object and the estimated number of application.

7. The method of claim 2, wherein the respective transaction value prediction models are constructed by:

obtaining various pieces of transaction data from a platform sales database, and categorizing respective object display environments to which the pieces of transaction data belong;

constructing corresponding training sample sets of the object display environments using transaction data under each category; and

training a respective transaction value prediction model with an estimated transaction value as a target with a training sample set of each object display environment using a regression model training.

8. The method of claim 2, wherein the respective application number prediction models are constructed by:

obtaining various pieces of application data from a platform sales database, and categorizing respective object display environments to which the pieces of application data belong;

counting respective numbers of applications within designated time periods in predefined application section(s) using application data under respective categories according to the application section(s);

performing counterpoint smoothing for various designated time lengths of all the application section(s) to obtain fitted numbers of applications of the various designated time periods by fitting; and

constructing corresponding application number prediction models of the object display environments based on the various designated time periods and the fitted numbers of applications.

9. The method of any one of claims 2-8, wherein the first object is a commodity object, the object display environment is a sales setting, and the estimated transaction values are estimated volumes of transaction.

10. A data processing method comprising:

sending a recommendation request to a server, the recommendation request including a first object and a user identifier; and

receiving a display recommendation returned from the server based on the recommendation request, and conducting a presentation in a client, the display recommendation being generated by the server based on an object display environment that matches with the first object, the object display environment that matches with the first object being determined based on historical records of various object display environments, and the various object display environments being filtered and selected from a plurality of object display environments based on property information of the user identifier.

11. A data processing apparatus comprising:

an environment filtering and selection module used for obtaining property information corresponding to the user identifier, and filtering and selecting various object display environments that match with the property information;
an environment determination module used for determining each object display environment matching the first object based on historical records and respective numbers of display positions of the object display environments under the various filtered and selected object display environments, the historical records including transaction data of various first objects and application data of the various first objects under corresponding object display environments; and
a recommendation returning module used for generating a display recommendation and returning the display recommendation to a client in which the user is located for display.

12. The apparatus of claim 11, wherein the environment determination module comprises:

an estimated transaction value determination sub-module used for separately calculating estimated transaction values of the first object under the various object display environments using respective transaction value prediction models of the object display environments, wherein the respective transaction value prediction models are constructed based on historical records of transaction data under corresponding object display environments;
an estimated application number determination sub-module used for separately calculating estimated numbers of applications of the first object under the various object display environments using respective application number prediction models of the object display environments based on corresponding numbers of applications of the various object display environments at the time when the recommendation request is received, wherein the respective application number prediction models are constructed based on historical records of application data under corresponding object display environments; and
an environment determination sub-module used for determining whether the first object is suitable for a respective object display environment for each object display environment based on an estimated transaction value, an estimated number of applications and the number of display positions under the respective object display environment.

13. The apparatus of claim 12, wherein the environment determination sub-module comprises:

a first acquisition sub-module used for determining an initial estimated ranking of the commodity object based on the estimated transaction value; and
an environment determination sub-module used for determining whether the first object is suitable for the respective object display environment based on the initial estimated ranking of the first object, the estimated number of applications, and a number of display positions under the respective object display environment.

14. The apparatus of claim 13, wherein the first environment determination sub-module comprises:

a final ranking determination sub-module used for calculating a final estimated ranking of the first object under the respective object display environment based on the initial estimated ranking of the first object and the estimated number of application; and
a position determination sub-module used for determining whether the final estimated ranking is smaller than the number of display positions of the respective object display environment, and if the final estimated ranking is smaller than the number of display positions, recommendation returning module.

15. The apparatus of claim 14, further comprising a compensation-for-failed-matching sub-module used for selecting an object display environment having a difference between a final estimated ranking for the first object and a corresponding number of display positions being the smallest as an object display environment matching the first object if final estimated rankings of the various object display environments are not smaller than respective numbers of display positions, and proceeding to the step of generating the display recommendation and returning the display recommendation to the client in which the user is located for display.

16. The apparatus of claim 14, wherein before the final ranking determination sub-module, the apparatus further comprises an ordering sub-module used for ordering the object display environments in a descending order of the estimated transaction values of the first object under the various object display environments, and starting from an object display environment positioned at the front of the order, entering thereof into the final ranking determination sub-module.

17. The apparatus of claim 12, further comprising a transaction value prediction model construction module, which includes:

a transaction data acquisition sub-module used for obtaining various pieces of transaction data from a platform sales database, and categorizing respective object display environments to which the pieces of transaction data belong;
a training sample set construction sub-module used for constructing corresponding training sample sets of the object display environments using transaction data under each category; and
a transaction value prediction model training sub-module used for training a respective transaction value prediction model with an estimated transaction value as a target with a training sample set of each object display environment using a regression model training.

18. The apparatus of claim 12, further comprising an application number prediction model construction module, which includes:

an application number acquisition sub-module used for obtaining various pieces of application data from a platform sales database, and categorizing respective object display environments to which the pieces of application data belong;
a demarcation sub-module used for counting respective numbers of applications within designated time periods in predefined application section(s) using application data under respective categories according to the application section(s);
a fitting sub-module used for performing counterpoint smoothing for various designated time lengths of all the application section(s) to obtain fitted numbers of applications of the various designated time periods by fitting; and
an application number prediction model construction sub-module used for constructing corresponding application number prediction models of the object display environments based on the various designated time periods and the fitted numbers of applications.

19. The apparatus of any one of claims 12-18, wherein the first object is a commodity object, the object display environment is a sales setting, and the estimated transaction values are estimated volumes of transaction.

20. A data processing apparatus comprising:

a request sending module used for sending a recommendation request to a server, the recommendation request including a first object and a user identifier; and
a recommendation presentation module used for receiving a display recommendation returned from the server based on the recommendation request, and conducting a presentation in the client, the display recommendation being generated by the server based on an object display environment that matches with the first object, the object display environment that matches with the first object being determined based on historical records of various object display environments, and the various object display environments being filtered and selected from a plurality of object display environments based on property information of the user identifier.

110

RECEIVE A RECOMMENDATION REQUEST SUBMITTED BY A USER, THE RECOMMENDATION REQUEST INCLUDING A FIRST OBJECT AND A USER IDENTIFIER

120

OBTAIN PROPERTY INFORMATION CORRESPONDING TO THE USER IDENTIFIER, AND FILTER AND SELECT VARIOUS OBJECT DISPLAY ENVIRONMENTS MATCHING WITH THE PROPERTY INFORMATION

130

DETERMINE OBJECT DISPLAY ENVIRONMENTS THAT MATCH WITH THE FIRST OBJECT BASED ON HISTORICAL RECORDS OF THE FILTERED AND SELECTED OBJECT DISPLAY ENVIRONMENTS AND CORRESPONDING NUMBERS OF DISPLAY POSITIONS OF THE OBJECT DISPLAY ENVIRONMENTS

140

GENERATE A DISPLAY RECOMMENDATION BASED ON OBJECT DISPLAY ENVIRONMENT(S) THAT MATCH(ES) WITH THE FIRST OBJECT, AND RETURN THE DISPLAY RECOMMENDATION TO A CLIENT OF THE USER FOR PRESENTATION

# FIG. 1

210

CONSTRUCT A TRANSACTION VALUE PREDICTION MODEL AND AN APPLICATION NUMBER PREDICTION MODEL IN ADVANCE

212

RECEIVE A RECOMMENDATION REQUEST SUBMITTED BY A USER

214

OBTAIN PROPERTY INFORMATION CORRESPONDING TO THE USER IDENTIFIER, AND SELECTS VARIOUS OBJECT DISPLAY ENVIRONMENTS MATCHING THE PROPERTY INFORMATION

216

SEPARATELY CALCULATE ESTIMATED TRANSACTION VALUES OF THE FIRST OBJECT UNDER THE VARIOUS OBJECT DISPLAY ENVIRONMENTS USING A RESPECTIVE TRANSACTION VALUE PREDICTION MODEL OF EACH OBJECT DISPLAY ENVIRONMENT

218

SEPARATELY CALCULATE ESTIMATED NUMBERS OF APPLICATIONS UNDER THE VARIOUS OBJECT DISPLAY ENVIRONMENTS USING RESPECTIVE APPLICATION NUMBER PREDICTION MODELS OF THE VARIOUS OBJECT DISPLAY ENVIRONMENTS BASED ON CORRESPONDING NUMBERS OF APPLICATIONS OF THE VARIOUS OBJECT DISPLAY ENVIRONMENTS AT THE TIME WHEN THE RECOMMENDATION REQUEST IS RECEIVED

220

ARRANGE THE OBJECT DISPLAY ENVIRONMENTS IN A DESCENDING ORDER OF SEQUENCE OF THE ESTIMATED TRANSACTION VALUES OF THE FIRST OBJECT UNDER THE VARIOUS OBJECT DISPLAY ENVIRONMENTS

222

SEQUENTIALLY DETERMINE AN INITIAL ESTIMATED RANKING OF THE COMMODITY OBJECT FOR EACH OBJECT DISPLAY ENVIRONMENT BASED ON THE ESTIMATED TRANSACTION VALUE

224

CALCULATE A FINAL ESTIMATED RANKING OF THE FIRST OBJECT UNDER OBJECT DISPLAY ENVIRONMENT BASED ON THE INITIAL ESTIMATED RANKING OF THE FIRST OBJECT AND THE ESTIMATED NUMBER OF APPLICATION

226

DETERMINE WHETHER THE FINAL ESTIMATED RANKING IS SMALLER THAN THE NUMBER OF DISPLAY POSITIONS OF THE OBJECT DISPLAY ENVIRONMENT

No                                          YES

228

SELECT AN OBJECT DISPLAY ENVIRONMENT HAVING A DIFFERENCE BETWEEN A RESPECTIVE FINAL ESTIMATED RANKING AND A CORRESPONDING NUMBER OF DISPLAY POSITIONS BEING THE SMALLEST

FINAL ESTIMATED RANKINGS OF THE VARIOUS OBJECT DISPLAY ENVIRONMENTS ARE ALL NOT SMALLER THAN CORRESPONDING NUMBERS OF DISPLAY POSITIONS

230

GENERATE A DISPLAY RECOMMENDATION BASED ON THE OBJECT DISPLAY ENVIRONMENT THAT MATCHES THE FIRST OBJECT, AND RETURN THE DISPLAY RECOMMENDATION TO A CLIENT IN WHICH THE USER IS LOCATED FOR PRESENTATION

# FIG. 2

310

SEND A RECOMMENDATION REQUEST TO A SERVER, THE RECOMMENDATION REQUEST INCLUDING A FIRST OBJECT AND A USER IDENTIFIER

320

RECEIVE A DISPLAY RECOMMENDATION RETURNED BY THE SERVER ACCORDING TO THE RECOMMENDATION REQUEST, AND DISPLAY THE DISPLAY RECOMMENDATION IN THE CLIENT

FIG. 3

RECOMMENDATION REQUEST RECEIVING MODULE <u>410</u>

ENVIRONMENT FILTERING AND SELECTION MODULE <u>420</u>

ENVIRONMENT DETERMINATION MODULE <u>430</u>

RECOMMENDATION RETURNING MODULE <u>440</u>

FIG. 4

REQUEST SENDING MODULE 510

RECOMMENDATION PRESENTATION MODULE 520

FIG. 5

# INTERNATIONAL SEARCH REPORT

International application No.

**PCT/CN2016/110657**

## A. CLASSIFICATION OF SUBJECT MATTER

G06Q 30/02 (2012.01) i

According to International Patent Classification (IPC) or to both national classification and IPC

## B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT; EPODOC; WPI; GOOGLE; CNKI: release, on-shelf, recommend, push, suggest, proposal, automatic, user, merchant, seller, environment, solution, channel, scene, platform, mode, match, show, present, goods, commodity, merchandise, put, sell, history

## C. DOCUMENTS CONSIDERED TO BE RELEVANT

| Category* | Citation of document, with indication, where appropriate, of the relevant passages | Relevant to claim No. |
|---|---|---|
| A | JP 2015075850 A (SHOKUHIN KAIHATSU KK), 20 April 2015 (20.04.2015), claims 1-6, and figures 1-10 | 1-20 |
| A | CN 103051730 A (HEFEI UNIVERSITY OF TECHNOLOGY), 17 April 2013 (17.04.2013), the whole document | 1-20 |
| A | CN 103942021 A (HUAWEI TECHNOLOGIES CO., LTD.), 23 July 2014 (23.07.2014), the whole document | 1-20 |
| A | CN 103019673 A (BEIJING QIANSHOULIAN TECHNOLOGY CO., LTD. et al.), 03 April 2013 (03.04.2013), the whole document | 1-20 |
| A | CN 102004979 A (YE, Ke), 06 April 2011 (06.04.2011), the whole document | 1-20 |
| A | US 2013297428 A1 (PEAK SILVER ADVISORS, LLC), 07 November 2013 (07.11.2013), the whole document | 1-20 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 09 March 2017 (09.03.2017) | **16 March 2017 (16.03.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **OU, Xiaodan** Telephone No.: (86-10) **82246933** |
|---|---|

Form PCT/ISA/210 (second sheet) (July 2009)

## INTERNATIONAL SEARCH REPORT
### Information on patent family members

| International application No. |
| --- |
| **PCT/CN2016/110657** |

| Patent Documents referred in the Report | Publication Date | Patent Family | Publication Date |
| --- | --- | --- | --- |
| JP 2015075850 A | 20 April 2015 | None | |
| CN 103051730 A | 17 April 2013 | CN 103051730 B | 25 March 2015 |
| CN 103942021 A | 23 July 2014 | WO 2015143875 A1 | 01 October 2015 |
| | | US 2017013241 A1 | 12 January 2017 |
| CN 103019673 A | 03 April 2013 | None | |
| CN 102004979 A | 06 April 2011 | None | |
| US 2013297428 A1 | 07 November 2013 | US 2009099902 A1 | 16 April 2009 |
| | | US 8924245 B2 | 30 December 2014 |
| | | US 8522270 B2 | 27 August 2013 |
| | | US 2014222589 A1 | 07 August 2014 |
| | | US 2014222590 A1 | 07 August 2014 |
| | | WO 2009050546 A1 | 23 April 2009 |
| | | US 8781875 B2 | 15 July 2014 |

Form PCT/ISA/210 (patent family annex) (July 2009)